(19) Europäisches Patentamt

European Patent Office

Office européen des brevets

(11) EP 1 456 571 B1

(12) EUROPÄISCHE PATENTSCHRIFT

(45) Veröffentlichungstag und Bekanntmachung des Hinweises auf die Patenterteilung:
25.01.2006 Patentblatt 2006/04

(21) Anmeldenummer: 02799734.5

(22) Anmeldetag: 30.11.2002

(51) Int Cl.:
*F16L 1/00* (2006.01)

(86) Internationale Anmeldenummer:
PCT/EP2002/013548

(87) Internationale Veröffentlichungsnummer:
WO 2003/056223 (10.07.2003 Gazette 2003/28)

(54) **VORRICHTUNG ZUR SCHALLDAEMPFUNG IN EINEM ROHRKANAL**

SOUND ABSORBING DEVICE IN A PIPE DUCT

DISPOSITIF D'INSONORISATION D'UN CANAL A TUYAUX

(84) Benannte Vertragsstaaten:
AT BE BG CH CY CZ DE DK EE ES FI FR GB GR IE IT LI LU MC NL PT SE SK TR

(30) Priorität: 22.12.2001 DE 10163812

(43) Veröffentlichungstag der Anmeldung:
15.09.2004 Patentblatt 2004/38

(73) Patentinhaber: Mann + Hummel GmbH
71638 Ludwigsburg (DE)

(72) Erfinder: GRAEFENSTEIN, Andreas
76131 Karlruhe (DE)

(74) Vertreter: Voth, Gerhard
Mann + Hummel GmbH,
Hindenburgstr. 45
71638 Ludwigsburg (DE)

(56) Entgegenhaltungen:
BE-A- 357 098     GB-A- 968 347
US-A- 2 031 451     US-A- 3 113 635
US-A- 3 913 703     US-A- 4 050 539

**Beschreibung**

Die Erfindung betrifft eine Vorrichtung zur Schalldämpfung in einem Rohrkanal, insbesondere einen gasführenden Kanal einer Brennkraftmaschine, der im Oberbegriff des Patentanspruchs 1 angegebenen Gattung.

Aus der DE 195 43 967 A1 ist eine Vorrichtung zur Dämpfung von Ansauggeräuschen eines pulsierend arbeitenden Verbrennungsmotors mit interner Verbrennung bekannt, wobei in einem Streckenabschnitt des Ansaug-Rohrkanals ein parallel zu einem Hauptkanal geführter Bypasskanal mit längerer Wegstrecke zwischen einer Abzweigung und einer Einmündung des Bypasskanals vorgesehen ist. Das längere Umwegrohr soll nach Art eines Interferenzrohres angeordnet sein, wobei die Länge des Umwegrohres und die Länge des dazu parallelen Hauptkanals des Ansaugweges so zu bemessen sind, dass bei Oberwellen einer störenden Geräuschfrequenz eine Auslöschung durch Interferenz auftritt. Das bekannte Umwegrohr soll an seinem einen Ende unter einem spitzen, in Strömungsrichtung der angesaugten Luft geöffneten Winkel und an seinem anderen Ende stumpfwinklig und möglichst in rechtem Winkel in den Ansaugrohrkanal einmünden.

Die EP 1 070 903 A1 beschreibt eine derartige Einrichtung, bei der ein bogenförmiger Bypasskanal vorgesehen ist, der senkrecht aus dem Rohrkanal abzweigt und am Ende der Wegstrecke senkrecht wieder in den Rohrkanal einmündet. Der beschriebene Interferenzdämpfer bildet bei Auslegungsfrequenz eine dreizackige Dämpfungskurve aus, die sich aus den Interferenzbedingungen ergeben. Die zwischen den drei Spitzen liegenden Dämpfungseinbrüche bis herab unter 10dB schränken die breitbandige Einsatzfähigkeit des Dämpfers ein. Hier sind Dämpfungswerte von mindestens 20dB erforderlich. Dieser Nachteil wird durch zwei zusätzliche λ/4 Rohre vermieden, deren Länge für diese Frequenzbereiche ausgelegt werden müssen.

Die FR 602.160 beschreibt ein spiralförmiges Rohrsystem mit unterschiedlichen Spiralsteigungen. Der hierdurch erzeugte akustische Laufzeitunterschied wird als Interferenzdämpfer für Abgasanlagen vorgeschlagen. Auch hier beträgt der Laufzeitunterschied L der halben oder ungradzahligen Vielfachen der Halben Wellenlänge des zu bedämpfenden Frequenzbereiches.

$$d = 2 * L \frac{f_{mid}}{\upsilon}$$   wobei υ die Schallgeschwindigkeit und d die Anzahl der in 2*L enthaltenen Lambda sind, da

$$\frac{f_{mid}}{\upsilon} = \lambda$$   ist. Durch mehrfaches Hintereinanderschatten bzw. Kaskadieren desselben Bauteiles soll eine Potenzierung des Dämpfungseffektes erreicht werden.

Das Dokument US 3,113,635 offenbart eine Vorrichtung zur Schalldämpfung in einem Rohrkanal. Der Schalldämpfer verfügt über einen Hauptkanal, um welchen ein spiralförmig angeordneter Bypasskanal geführt ist. Der Bypasskanal ist über eine akustisch wirksame Wand mit dem Hauptkanal verbunden. Der den Hauptkanal umgebende Bypasskanal ist von einem weiteren Rohr umschlossen, welches das Fluid vor und nach den Kanälen führt.

Die bekannten Einrichtungen erfordern einen großen Platzbedarf zur Anordnung der bogenförmigen Bypasskanäle, die zum Teil weit abseits des Hauptkanals verlaufen. Weiterhin ist die Herstellung der Bypasskanäle aufwendig. Insbesondere bei der Schalldämpfung von Brennkraftmaschinen für Kraftfahrzeuge ist regelmäßig der verfügbare Bauraum sehr begrenzt, so dass die bekannten Einrichtungen zu groß bauen und für den Einsatz in Kraftfahrzeug-Brennkraftmaschinen nicht geeignet sind.

Der vorliegenden Erfindung liegt die Aufgabe zugrunde, die bekannte Vorrichtung zur Schalldämpfung derart auszubilden, dass der Raumbedarf der Dämpfungsvorrichtung reduziert ist. Diese Aufgabe wird erfindungsgemäß mit den Merkmalen des Patentanspruchs 1 gelöst.

Erfindungsgemäß ist vorgesehen, den Bypasskanal als schraubenförmig um eine Mittelachse des Hauptkanals verlaufenden Spiralkanal auszubilden. Der Spiralkanal mit seiner höheren Länge zwischen Abzweigung und Einmündung in den Rohrkanal kann auf diese Weise sehr dicht benachbart des Hauptkanals angeordnet sein, wodurch der Hauptkanal und der Bypasskanal eine sehr kompakte Baugruppe bilden. Der Spiralkanal ist dabei am Umfang des Hauptkanals angeordnet, wodurch sich bereits bei wenigen Windungen die erforderliche Verlängerung des parallelen Spiralkanals im Verhältnis zum Mittelkanal erreichen lässt, welcher im wesentlichen gerade oder leicht gebogen zwischen der Abzweigung und der Einmündung des Spiralkanals verläuft. Erfindungsgemäß sind mehrere Spiralkanäle vorgesehen, wobei die Spiralkanäle jeweils in den Zwischenräumen der mit entsprechender Schraubensteigung liegenden anderen Spiralkanäle aufgenommen sind.

Mit den erfindungsgemäßen Spiralkanälen kann das Schallspektrum im Rohrkanal durch die Laufzeitunterschiede der Schallwellen in den längeren Spiralkanälen und dem Hauptkanal in phasenverschobene Druckwellen umgesetzt werden, die leicht auslöschbar sind. Der gemeinsame Durchgangsquerschnitt der Spiralkanäle ist vorteilhaft größer als der Durchgangsquerschnitt des Hauptkanals. Der Durchgangsquerschnitt des Spiralkanals wird im Hinblick auf das Frequenzband des zu dämpfenden Schallspektrums im Rohrkanal abgestimmt. Die Spiralkanäle können dabei gleiche Durchgangsquerschnitte aufweisen, wobei jedoch besonders vorteilhaft auch unterschiedliche Durchgangsquerschnitte der Spiralkanäle vorgesehen sein können, welche auf die gewünschten Frequenzbereiche, welche zu dämpfen sind, abstimmbar sind. Die einzelnen Spiralkanäle können auch über ihre Länge auf den zu dämpfenden Frequenzbereich abgestimmt werden. Die erfindungsgemäße Ausbildung der Spiralkanäle erlaubt dabei besonders platzsparend die jeweilige Wegstrecke der Spiralkanäle durch entsprechende Ausbildung der Schraubensteigung auf das zu dämpfende Schallspektrum abzustimmen.

Die Längen der Haupt- und Neben- Durchströmungsrichtung zueinander sind hierbei sehr genau auszulegen. Wenige mm Fehlauslegung können den erwünschten Dämpfungseffekt erheblich mindern. Hierbei gilt für genau einen Bypasskanal die theoretische Mittenfrequenz:

$$f_{mid} = \frac{340\frac{m}{s}}{L2 * 2}$$ mit L2 als Länge der Hauptdurchströmungsrichtung und der Schallgeschwindigkeit von 340m/s.

Da die akustischen Längen der Kanäle nicht identisch mit den geometrischen des Bauteiles sind, sind die idealen Spirallängen der Kanäle kürzer zu bemessen als die theoretisch berechneten Längen. Hierbei können die geometrischen Spirallängen bis zu 14% verkürzt, bezogen auf die akustische Länge der Kanäle, ausgeführt sein.

Für vier Spiralbypasskanäle erfordert die Formel z.B. eine Korrektur der akustischen Hauptlänge um einen Faktor von ca. 1,7. Eine gewünschte Mittenfrequenz von 2,5Khz ergäbe dann nicht eine Hauptkanallänge von 68mm sondern läge dann bei ca.120mm.

Zur Vermeidung von Dämpfungseinbrüchen zwischen den drei Dämpfungspeaks verwendet die vorliegende Erfindung eine Variation der Querschnittsflächen von Hauptdurchströmungskanal zur Summe der Bypassdurchströmungskanäle. Bei geeignet kleiner Gesamtspiralquerschnittsfläche zur Querschnittsfläche des Hauptdurchströmungskanals verschwinden die zwischen den drei Dämpfungspeaks liegenden Einbrüche und können weit über die 20dB geschoben werden.

Die erfindungsgemäße Dämpfungseinrichtung mit Spiralkanälen erlaubt eine sehr kompakte Gestaltung eines Breitbanddämpfers, der auch zur Dämpfung von Frequenzen oberhalb von 1000 Hz einsetzbar ist. Erfindungsgemäß ist der Hauptkanal durch ein Mittelrohr gebildet, an dessen Außenseite die Spiralkanäle anliegen. Dabei ist ein geringer Fertigungsaufwand erforderlich, wenn die Spiralkanäle als Halbschalen auf dem Mittelrohr befestigt sind, welches ein Fortsatz des Rohrkanals vor der Abzweigung der Spiralkanäle sein kann. Die Eintritts- und Austrittsöffnungen der Spiralkanäle können dabei durch Durchbrüche in der Wandung des Mittelrohres gegeben sein. Besonders vorteilhaft liegen die Eintrittsöffnungen und Austrittsöffnungen des Hauptkanals und der Spiralkanäle in einer durchströmten Querschnittsfläche des Rohrkanals. Die Spiralkanäle liegen so parallel zur Gasströmung im Rohrkanal und tragen zur Verringerung des Druckverlustes in vollem Umfang bei.

Bei einer anderen Gestaltung der Vorrichtung zur Schalldämpfung, die nicht Teil der beanspruchten Erfindung ist, ist pro Spiralkanal ein um die Mittelachse gewundenes Spiralband in den Rohrkanal eingesetzt, welches mit in axialer Überdeckung zueinander liegenden Schraubengängen eine Ringfläche ausbildet und den Spiralkanal begrenzt. Das flache Schraubenband ist dabei in radialer Ausrichtung zur Mittelachse derart gewunden ausgebildet, dass es an der Innenseite des Rohrkanals anliegt und die Innenwand so die Spiralkanäle in radialer Richtung begrenzt. Die Schraubenbänder mehrerer Spiralkanäle sind dabei mit versetzten Drehwinkeln in Umfangsrichtung des Rohrkanals angeordnet, wobei über den Drehwinkel der gewünschte Durchströmquerschnitt in Abstimmung mit den zu dämpfenden Frequenzen einstellbar ist.

Ausführungsbeispiele der Erfindung sind nachstehend anhand der Zeichnung näher erläutert. Es zeigen:

Fig. 1    eine schematische Darstellung einer Brennkraftmaschine mit einer erfindungsgemäßen Dämpfungsvorrichtung in der Ansaugleitung,

Fig. 2    eine perspektivische Ansicht einer erfindungsgemäßen mit Spiralkanälen ausgestatteten Dämpfungsvorrichtung,

Fig. 3    eine alternative Ausgestaltung der erfindungsgemäßen Dämpfungsvorrichtung,

Fig. 4    eine perspektivische Ansicht eines Dämpferbauteils zur Ausbildung von Spiralkanälen.

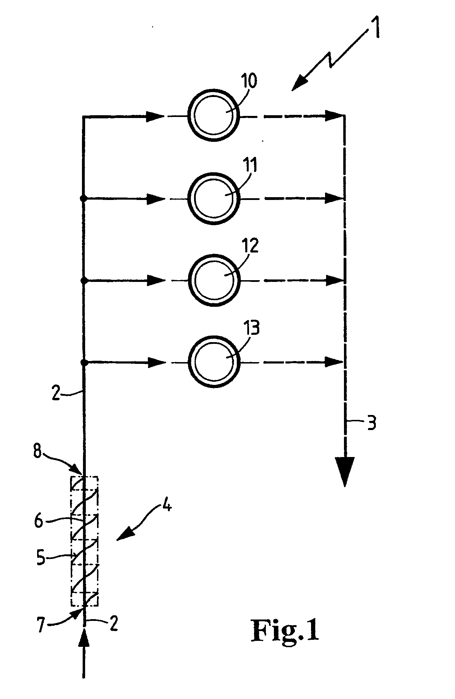

Die in Fig. 1 dargestellte Brennkraftmaschine 1 besteht aus vier Zylindern 10, 11, 12, 13, denen aus einer gemeinsamen Ansaugleitung 2 Frischgas zum Zwecke der Verbrennung zugeführt wird. Die verbrannten Abgase der Zylinder 10 bis 13 werden über eine Abgasleitung 3 abgeführt. In der Ansaugleitung 2 ist eine Vorrichtung zur Dämpfung 4 der Schallentwicklung in dem Rohrkanal der Ansaugleitung 2 angeordnet. Die Dämpfungsvorrichtung 4 umfasst dabei mehrere parallele Kanäle in einem Streckenabschnitt zwischen der Abzweigung 7 und der Einmündung 8 in den Rohrkanal 2, an der die parallelen Strömungskanäle wieder zusammengeführt sind. In diesem Streckenabschnitt ist dabei ein Hauptkanal 6 vorgesehen, welcher im wesentlichen geradlinig zwischen der Abzweigung 7 und der Einmündung 8 verläuft. Parallel zum Hauptkanal 6 sind mehrere Bypasskanäle vorgesehen, welche als Spiralkanäle 5 ausgebildet sind und schraubenförmig am Umfang des Hauptkanals 6 anliegen. Die Spiralkanäle 5 haben durch den schraubenförmigen Verlauf eine längere Wegstrecke als der Hauptkanal 6 zwischen der Abzweigung 7 und der Einmündung 8 zur Erzeugung von akustischen Laufzeitunterschieden in den parallelen Rohrkanälen. In kompakter Bauweise der aus Hauptkanal und schraubenförmig eng anliegenden Bypasskanälen wird unter Ausnutzung des Interferenzeffektes eine Schalldämpfung erreicht.

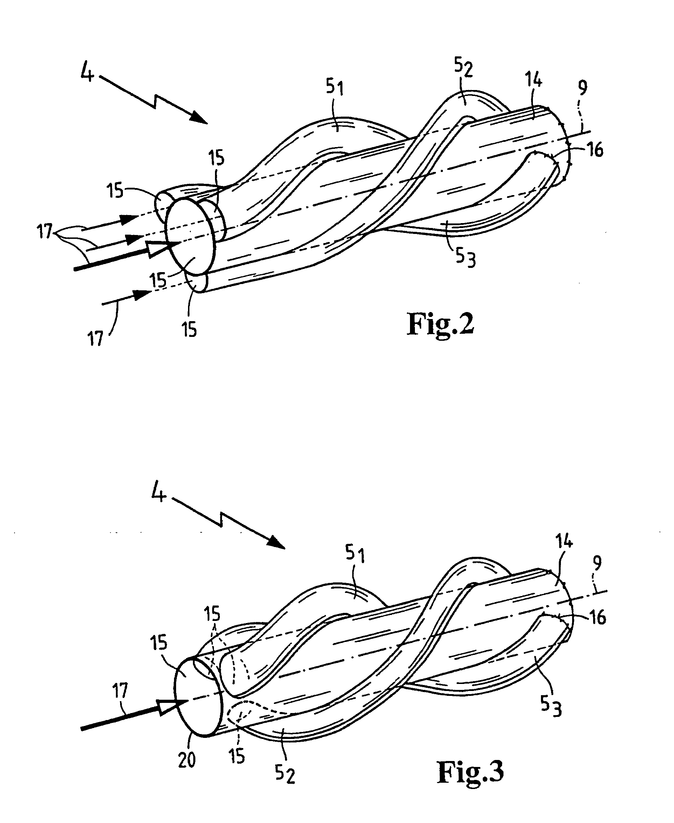

Fig. 2 zeigt eine mögliche Ausgestaltung der erfindungsgemäßen Vorrichtung zur Schalldämpfung, bei der der Hauptkanal durch ein geradlinig ausgebildetes Mittelrohr 14 gebildet ist, an dessen Außenmantel drei Spiralkanäle $5_1$, $5_2$, $5_3$ anliegen. Die Spiralkanäle sind bei diesem Ausführungsbeispiel als Halbschalen ausgebildet und auf dem Rohrmantel des Mittelrohres 14 aufgeschweißt. Hierbei bildet der Rohrmantel des Mittelrohr 14 einen Teil der Wandung der Spiralkanäle $5_1$, $5_2$, $5_3$. Die Durchtrittsquerschnitte der Spiralkanäle $5_1$, $5_2$, $5_3$ weichen in der Summe von dem Durchtrittsquerschnitt des Hauptkanals im Mittelrohr 14 ab und sind im vorliegenden vorteilhaften Ausführungsbeispiel größer als der Durchtrittsquerschnitt des Mittelrohres 14. Durch geeignete Auswahl der Durchtrittsquerschnitte der Spiralkanäle $5_1$, $5_2$, $5_3$ sowie deren Länge ist die Dämpfungswirkung der erfindungsgemäßen Vorrichtung bedarfsweise abstimmbar. Die Durchtrittsöffnungen der Spiralkanäle $5_1$, $5_2$, $5_3$ des Breitbanddämpfers können dabei voneinander abweichen, um ein möglichst breites Frequenzspektrum dämpfen zu können.

Die Länge der Spiralkanäle $5_1$, $5_2$, $5_3$ ist durch geeignete Auswahl der Steigung der Schraubenwindung der Kanäle um die Mittelachse 9 des Mittelrohrs 14 abstimmbar. Im vorliegenden Ausführungsbeispiel liegen die Eintrittsöffnungen 15 in einem gemeinsamen Anströmquerschnitt mit dem Mittelrohr 14, auf diese wird die in Strömungsrichtung 17 anströmende Ansaugluft zum Verbrennungsmotor mit geringem Druckverlust durch die Dämpfungseinrichtung geführt, wobei die strömungsgünstig liegenden Eintrittsöffnungen 15 wirksam beitragen. In entsprechender Weise sind die Austrittsöffnungen 16 der Spiralkanäle $5_1$, $5_2$, $5_3$ im Bereich der Einmündung in das Mittelrohr 14 gestaltet, wobei mit dem Mittelrohr ein gemeinsamer Strömungsquerschnitt gebildet ist. Die Steigung der Schraubenlinie der Spiralkanäle $5_1$, $5_2$, $5_3$ ist derart gewählt, dass sich eine Verlängerung der effektiven Wegstrecke der Spiralkanäle um etwa 200 % gegenüber der Wegstrecke im Mittelrohr 14 ergibt. Durch die strömungsgünstige Ausgestaltung der Eintrittsöffnungen 15 und der Austrittsöffnungen 16 der Spiralkanäle $5_1$, $5_2$, $5_3$ wird eine Abschwächung des dämpfenden Verschiebungseffektes auf die Frequenzauflösung durch den Dopplereffekt bei variabler Durchströmung vermieden.

Fig. 3 zeigt eine Ausgestaltung des erfindungsgemäßen Dämpfers 4 mit drei Spiralkanälen $5_1$, $5_2$, $5_3$, welche als Halbschalenelemente am Umfang der Rohrwandung 20 des Mittelrohres 14 aufgeschweißt sind, wobei die Eintrittsöffnungen 15 und Austrittsöffnungen 16 der Spiralkanäle $5_1$, $5_2$, $5_3$ durch Durchbrüche in der Rohrwandung 20 gebildet sind. Der auf die durchströmende Luft 17 wirkende Druckverlust in der Dämpfer-Wegstrecke wird dabei nur durch den Durchtrittsquerschnitt des Mittelrohres 14 bestimmt.

Die Abstimmung des erfindungsgemäßen Dämpfers 4 auf das zu dämpfende Schallspektrum kann durch Variation sowohl der Durchtrittsquerschnitte der Spiralkanäle als auch durch Variation deren Wegstrecke abgestimmt werden, wobei mehrere Spiralkanäle mit unterschiedlichen Durchtrittsquerschnitten ein breitbandiges Verhalten des Gesamtsystems ergeben. Die Abstimmung der Wegstrecke der Spiralkanäle, die möglichst dem Doppelten der Wegstrecke des Mittelrohres entsprechen soll, wird durch die Steigung der Schraubenlinie der Spiralkanäle festgelegt, wobei die Auswahl der geeigneten Steigung der Spiralkanäle im Hinblick auf die kompakte Bauweise des gesamten Dämpferelementes getroffen wird.

Die Wegstrecken der Spiralkanäle des Dämpfers sind wegen der 3D-Effekte im Vergleich zum Stand der Technik stark unterschiedlich und weichen von der bisher bekannten Auslegungsformeln ab. Der Effekt ist von der komplexen 3D Struktur des Spiral-Dämpfers abhängig und im wesentlichen begründet durch Endkorrekturen der akustisch wirkenden Kanalöffnungen beiderseits des Dämpfers. Hierbei zeigt sich, dass zur Auslegung der Mittenfrequenz nicht der Quotient von Schallgeschwindigkeit zur halben Wellenlänge der auszulegenden Frequenz gilt, sondern ein Korrekturfaktor der Bauteillänge erforderlich ist, die für die untersuchte Geometrie hier 1,7% beträgt. Eine kleine Tabelle zeigt die Unterschiede der 3D berechneten wirksamen Mittenfrequenzen (Auslegungsfrequenz) im Vergleich mit denen der aus der 1 D Auslegung vorgegebenen Bauteillänge.

| $f_{mid} = \dfrac{\upsilon}{\lambda}$ mid mit λ=2*$L_2$ ; υ Schallgeschwindigkeit L2 : Hauptpfadlänge | | |
|---|---|---|
| | 2500Hz | 1214Hz |
| Stand der Technik $L_{2\_Selamet\_Dickey}$ | 68mm | 140mm |
| Spiraldämpfer 3D Simulation $L_{2\_3D\_sysnoise}$ | 120mm | 247mm |

Für die Hauptkanallänge eines in vier Spiralen unterteilten Dämpfers ergeben sich somit für die Mittenfrequenzauslegung des untersuchten Dämpfers eine um den Faktor 1,76 korrigierte Hauptlänge. Die für eine benötigte Mittenfrequenz zu berechnende Hauptlänge muss um den genannten Faktor größer sein als diejenige die sich aus der Bekannten Formel

ergibt $\left( L_{2\_Selamet\_Dickey} = \dfrac{\upsilon}{2 * f_{mid}} \right)$. Da die Anzahl der Spiralen und

Querschnittsflächen wie Geometrien sämtlicher Kanäle einen wesentlichen Einfluss auf die Mündungsendkorrektur und somit auf die akustischen Pfadlängen hat, muss der Korrekturfaktor in jedem Falle neu bestimmt werden, wenn die genannten Größen geändert werden. Es kann aber immer davon ausgegangen werden, dass die Bauteillänge des Hauptkanals immer größer gewählt werden muss, als die aus der bekannten Auslegungsformel berechnete.

Die spiralförmige Ausgestaltung der parallelen Nebenstromkanäle zum geraden Hauptkanal ergibt beim Einsatz in Ansaugleitungen von Brennkraftmaschinen die Möglichkeit, den erzeugten Strömungsdrall am Ausgang der Spiralkanäle in Kombination mit einem nachgeschalteten Zyklonabscheider zur Luftreinigung zu nutzen.

Ist die Erzeugung von Dralleffekten am Ausgang der Spiralkanäle unerwünscht, so können die Spiralkanäle mit jeweils unterschiedlichem Windungssinn um die Mittelachse 9 des Hauptkanals angeordnet werden.

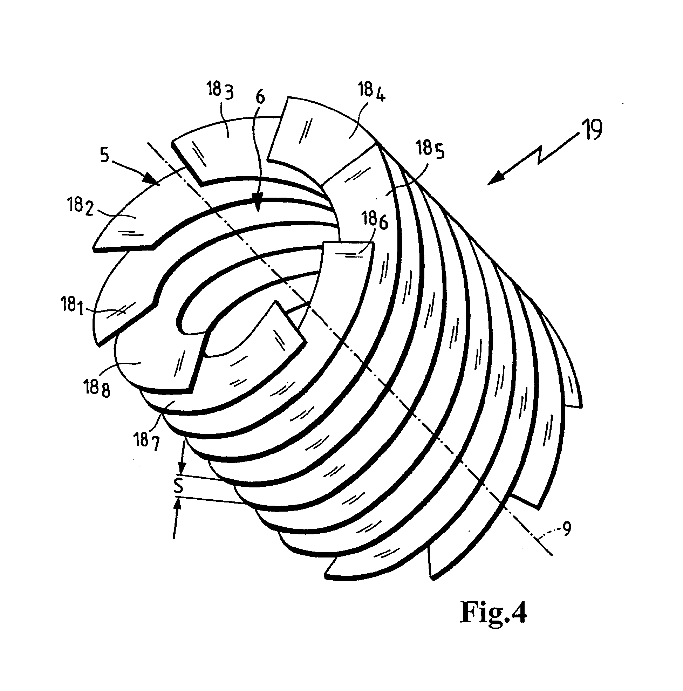

Fig. 4 zeigt ein Dämpferbauteil 19 zur Bildung der Spiralkanäle 5 in der Ansaugleitung der Brennkraftmaschine, wobei pro Spiralkanal ein entsprechend um die Mittelachse 9 des Hauptkanals spiralförmig gewundenes Schraubenband $18_1$ bis $18_8$ vorgesehen ist. Dieses Dämpferbauteil 19 ist nicht Teil der beanspruchten Erfindung. Jedes Schraubenband $18_1$ bis $18_8$ bildet mit in axialer Überdeckung zueinanderliegenden Schraubengängen eine Ringfläche, die dem gesamten Anströmquerschnitt der Spiralkanäle entspricht. In dem zentralen Innenraum der Schraubenbänder $18_1$ bis $18_8$ ist der kreisförmige Hauptkanal 6 gebildet, der durch Einschieben eines Rohres räumlich abgegrenzt werden kann. Die gewundenen Schraubenbänder $18_1$ bis $18_8$ sind mit versetzten Drehwinkeln in Umfangsrichtung des Rohrkanals angeordnet, wobei der Drehwinkel zwischen zwei Schraubenbändern dem Eintrittsquerschnitt eines von diesen Schraubenbändern begrenzten Spiralkanals entspricht. Über eine Veränderung der Drehwinkelanordnung benachbart liegender Schraubenbänder kann bedarfsweise eine Veränderung des zu dämpfenden Frequenzbandes erreicht werden, wobei auch Schraubenbänder unterschiedlicher Steigung zweckmäßig sein können. Im vorliegenden Ausführungsbeispiel sind Schraubenbänder gleicher Steigung eingesetzt, die in gleichmäßiger Drehwinkelaufteilung um die Mittelachse 9 des Hauptkanals 6 gruppiert sind, wobei sich die axiale Höhe 8 jedes Spiralkanals 5 aus der Steigung der Schraubenbänder unter Berücksichtigung der Gesamtzahl der Schraubenbänder ergibt.

Die Schraubenbänder $18_1$ bis $18_8$ liegen in eingebautem Zustand an der Innenwandung des Rohrkanals an, welche die Spiralkanäle in radialer Richtung begrenzt. Die Schraubenbänder können auch an einem gemeinsamen Halteteil befestigt sein und sind so als gemeinsames Dämpferbauteil 4 in den Rohrkanal einsetzbar. Da die Fortpflanzung der akustischen Schallwellen über den kürzesten Weg erfolgt, ist eine hinreichend feine Unterteilung des Nebenstromweges in eine geeignete Anzahl an Spiralkanälen zweckmäßig. Bei zu grober Unterteilung wird sich die berechnete Länge der Schraubenlinie verkürzen. Änderungen der Längenverhältnisse der Wegstrecken von Hauptkanal und Spiralkanälen wirken sich auf den Auslegungsbereich des zu dämpfenden Frequenzbandes aus, so dass eine feine Unterteilung in eine Vielzahl von Spiralkanälen - im gezeigten Ausführungsbeispiel acht Kanäle - als vorteilhaft anzusehen ist. Die Auslegung der Schraubenlinie erfolgt über das Integral einer parametrisierten Schraubenkurve, wobei sich über eine konstruktiv vorgegebene Länge des Dämpferbauteils nach gegebenen Räumlichkeiten zum Einbau der Dämpfungsvorrichtung aus dem geforderten Dämpfungsbereich die Schraubensteigung ergibt.

**Patentansprüche**

1. Vorrichtung zur Schalldämpfung in einem Rohrkanal (2), insbesondere einem gasführenden Kanal einer Brennkraftmaschine (1), wobei in einem Streckenabschnitt des Rohrkanals (2) mindestens ein parallel zu einem Hauptkanal (6) geführter Bypasskanal (5, $5_1$, $5_2$, $5_3$) mit längerer Wegstrecke zwischen einer Abzweigung (7) und einer Einmündung (8) des Bypasskanals (5, $5_1$, $5_2$, $5_3$) vorgesehen ist, wobei der Bypasskanal (5) als schraubenförmig um eine Mittelachse (9) gewundener Spiralkanal ($5_1$, $5_2$, $5_3$) ausgebildet ist, wobei der Spiralkanal ($5_1$, $5_2$, $5_3$) am Umfang des Hauptkanals (6) angeordnet ist und mehrere Spiralkanäle ($5_1$, $5_2$, $5_3$) vorgesehen sind **dadurch gekennzeichnet, dass** der Hauptkanal (6) durch ein Mittelrohr (14) gebildet ist, an dessen Außenseite die Spiralkanäle ($5_1$, $5_2$, $5_3$) anliegen, wobei die Spiralkanäle ($5_1$, $5_2$, $5_3$) durch am Mittelrohr (14) befestigte Halbschalen begrenzt sind.

2. Vorrichtung nach Anspruch 1, **dadurch gekennzeichnet, dass** der gemeinsame Durchgangsquerschnitt der Spiralkanäle ($5_1$, $5_2$, $5_3$) von dem Durchgangsquerschnitt des Hauptkanals (6) abweicht.

**3.** Vorrichtung nach Anspruch 2, **dadurch gekennzeichnet, dass** der gemeinsame Durchgangsquerschnitt der Spiralkanäle ($5_1$, $5_2$, $5_3$) größer ist als der Durchgangsquerschnitt des Hauptkanals (6).

**4.** Vorrichtung nach einem der Ansprüche 1 bis 3, **dadurch gekennzeichnet, dass** die Spiralkanäle ($5_1$, $5_2$, $5_3$) unterschiedliche Durchgangsquerschnitte aufweisen.

**5.** Vorrichtung nach Anspruch 4, **dadurch gekennzeichnet, dass** der Durchgangsquerschnitt jedes Spiralkanals ($5_1$, $5_2$, $5_3$) auf ein Frequenzband des zu dämpfenden Schallspektrums im Rohrkanal (2) abgestimmt ist.

**6.** Vorrichtung nach einem der Ansprüche 1 bis 5, **dadurch gekennzeichnet, dass** die jeweilige Wegstrecke der Spiralkanäle ($5_1$, $5_2$, $5_3$) durch entsprechende Ausbildung der Schraubensteigung auf das zu dämpfende Schallspektrum abgestimmt ist.

**7.** Vorrichtung nach einem der Ansprüche 1 bis 6, **dadurch gekennzeichnet, dass** Eintrittsöffnungen (16) und Austrittsöffnungen (17) der Spiralkanäle ($5_1$, $5_2$ , $5_3$) durch Durchbrüche in der Rohrwandung (20) des Mittelrohres (14) gebildet sind.

**8.** Vorrichtung nach einem der Ansprüche 1 bis 7, **dadurch gekennzeichnet, dass** Eintrittsöffnungen (16) und Austrittsöffnungen (17) der Spiralkanäle ($5_1$, $5_2$, $5_3$) in einer durchströmten Querschnittsfläche des Rohrkanals (2) liegen.

**9.** Vorrichtung nach einem der Ansprüche 1 bis 8, **dadurch gekennzeichnet, dass** die Spiralkanäle ($5_1$, $5_2$, $5_3$) mit unterschiedlichem Windungssinn ausgebildet sind.

**Claims**

**1.** Device for sound damping in a pipe duct (2), more especially in a gas-conducting duct of an internal combustion engine (1), wherein there is provided in a section of the pipe duct (2) at least one bypass duct (5, $5_1$, $5_2$, $5_3$,) which is guided parallel to a main duct (6) and is longer than said main duct between a branching -off point (7) and an entry point (8) of the bypass duct (5, $5_1$, $5_2$, $5_3$,), wherein the bypass duct (5) is in the form of a spiral duct ($5_1$, $5_2$, $5_3$)which is wound about a central axis (9) in a helical manner, wherein the spiral duct ($5_1$, $5_2$, $5_3$) is disposed on the circumference of the main duct (6) and a plurality of spiral ducts ($5_1$, $5_2$, $5_3$) are provided, **characterised in that** the main duct (6) is formed by a central pipe (14), the spiral ducts ($5_1$, $5_2$, $5_3$) abutting against the outside of the said central pipe, wherein the spiral ducts ($5_1$, $5_2$, $5_3$) are defined by half-shells secured to the central pipe (14).

**2.** Device according to claim 1, **characterised in that** the total cross-sectional area of passage of the spiral ducts ($5_1$, $5_2$, $5_3$) is different from the cross-sectional area of passage of the main duct (6).

**3.** Device according to claim 2, **characterised in that** the total cross-sectional area of passage of the spiral ducts ($5_1$, $5_2$, $5_3$) is greater than the cross-sectional area of passage of the main duct (6).

**4.** Device according to one of claims 1 to 3, **characterised in that** the spiral ducts ($5_1$, $5_2$, $5_3$) have different cross-sectional areas of passage.

**5.** Device according to claim 4, **characterised in that** the cross-sectional area of passage of each spiral duct ($5_1$, $5_2$, $5_3$) is tuned to a frequency band of the sound spectrum to be damped in the pipe duct (2).

**6.** Device according to one of claims 1 to 5, **characterised in that** the respective length of the spiral ducts ($5_1$, $5_2$, $5_3$) is tuned to the sound spectrum to be damped by designing the pitch of the helix in a corresponding manner.

**7.** Device according to one of claims 1 to 6, **characterised in that** inlet openings (16) and outlet openings (17) of the spiral ducts ($5_1$, $5_2$, $5_3$) are formed by apertures in the pipe wall (20) of the central pipe (14).

**8.** Device according to one of claims 1 to 7, **characterised in that** inlet openings (16) and outlet openings (17) of the spiral ducts ($5_1$, $5_2$, $5_3$) are situated i n a traversed cross-sectional area of the pipe duct (2).

**9.** Device according to one of claims 1 to 8, **characterised in that** the spiral ducts ($5_1$, $5_2$, $5_3$) are configured with different directions of winding.

**Revendications**

1. Dispositif d'insonorisation d'un canal tubulaire (2), notamment d'un canal transportant du gaz d'un moteur à combustion interne (1), avec au moins un canal de dérivation (5, $5_1$, $5_2$, $5_3$) guidé parallèle à un canal principal (6) et prévu dans un segment du canal tubulaire (2) avec un trajet parcouru plus long entre une ramification (7) et une embouchure (8) du canal de dérivation (5, $5_1$, $5_2$, $5_3$), le canal de dérivation (5) étant un canal en spirale ($5_1$, $5_2$, $5_3$) enroulé de manière hélicoïdale autour d'un axe central (9), et plusieurs canaux en spirale ($5_1$, $5_2$, $5_3$) étant prévus à la périphérie du canal principal (6),
   **caractérisé en ce que**
   le canal principal (6) est formé par un tuyau central (14) dont la face extérieure comporte les canaux en spirale ($5_1$, $5_2$, $5_3$), limités par des semi-tuyaux fixés au tuyau central (14).

2. Dispositif selon la revendication 1, **caractérisé en ce que**
   la section de passage commune des canaux en spirale ($5_1$, $5_2$, $5_3$) s'écarte de la section de passage du canal principal (6).

3. Dispositif selon la revendication 2,
   **caractérisé en ce que**
   la section de passage commune des canaux en spirale ($5_1$, $5_2$, $5_3$) est supérieure à celle du canal principal (6).

4. Dispositif selon l'une quelconque des revendications 1 à 3,
   **caractérisé en ce que**
   les canaux en spirale ($5_1$, $5_2$, $5_3$) présentent différentes sections de passage.

5. Dispositif selon la revendication 4,
   **caractérisé en ce que**
   la section de passage de chaque canal en spirale ($5_1$, $5_2$, $5_3$) est ajustée à une bande de fréquences du spectre acoustique à insonoriser dans le canal tubulaire (2).

6. Dispositif selon l'une quelconque des revendications 1 à 5,
   **caractérisé en ce que**
   le trajet parcouru respectif des canaux en spirale ($5_1$, $5_2$, $5_3$) est ajusté au spectre acoustique à insonoriser par une conception correspondante du pas de vis.

7. Dispositif selon l'une quelconque des revendications 1 à 6,
   **caractérisé en ce que**
   les orifices d'entrée (16) et de sortie (17) des canaux en spirale ($5_1$, $5_2$, $5_3$) sont formés par des ajours dans la paroi (20) du tuyau central (14).

8. Dispositif selon l'une quelconque des revendications 1 à 7,
   **caractérisé en ce que**
   les orifices d'entrée (16) et de sortie (17) des canaux en spirale ($5_1$, $5_2$, $5_3$) se trouvent dans une section du canal tubulaire (2) assurant l'écoulement.

9. Dispositif selon l'une quelconque des revendications 1 à 8,
   **caractérisé en ce que**
   les canaux en spirale ($5_1$, $5_2$, $5_3$) sont formés avec des sens d'enroulement différents.

Fig.1

**Fig.2**

**Fig.3**

**Fig.4**